# EUROPÄISCHE PATENTSCHRIFT

(11) **EP 1 640 616 B1**
(45) Veröffentlichungstag und Bekanntmachung des Hinweises auf die Patenterteilung: **06.12.2017**
(21) Anmeldenummer: 05026407.6
(22) Anmeldetag: 11.12.2002
(51) Int. Cl.: F24D 19/10, F04D 15/00

(54) **Heizungsumwälzpumpe**
Circulation pump for heating system
Pompe de circulation de chauffage

(30) Priorität: 24.12.2001 DE 10163989
(43) Veröffentlichungstag der Anmeldung: 29.03.2006
(62) Teilanmeldung aus: 02027716.6
(73) Patentinhaber: GRUNDFOS A/S, DK-8850 Bjerringbro (DK)
(72) Erfinder: Vadstrup, Pierre, 8381 Mundelstrup (DK); Enevoldsen, Lars R., 8382 Hinnerup (DK)
(74) Vertreter: Vollmann, Heiko

(56) Entgegenhaltungen:
- EP-A- 0 736 826
- EP-A2- 0 444 269
- DE-A- 4 312 150
- DE-A1- 4 135 509
- DE-A1- 4 239 929
- DE-A1- 19 525 887
- DE-A1- 19 611 075
- DE-A1- 19 912 588

## Beschreibung

Die Erfindung betrifft eine elektromotorisch angetriebene Heizungsumwälzpumpe.

Bei Heizungsumwälzpumpen, insbesondere für Heizungsanlagen kleiner und mittlerer Leistung, beispielsweise für Einfamilienhäuser, ist es bekannt, die Leistung der Pumpe mittels eines Stufenschalters manuell zu steuern. Wenn nicht eine regelmäßige Anpassung der Schaltstufen an die erforderliche Fördermenge bzw. die erforderliche Förderhöhe erfolgt, muss die Schaltstellung so gewählt werden, dass alle erdenklichen Leistungsfälle, also auch die von der Pumpe zu fördernde Maximalleistung, abgedeckt sind. Dies führt dazu, dass das Aggregat in der meisten Zeit mit viel zu hoher Leistung gefahren wird, was innerhalb der Heizungsanlage einerseits zu Geräuschentwicklungen führen kann und darüber hinaus unnötig hohe Energiekosten bedingt.

Insofern günstiger sind Heizungspumpenaggregate mit Differenzdrucksteuerung, welche üblicherweise auf einer vorgegebenen Regelkurve betrieben werden. Derartige Heizungsumwälzpumpenaggregate sind heutzutage mit einem Drehzahlsteller gesteuert, so dass die Pumpe in jedem beliebigen Punkt eines Kennfeldes betreibbar ist. Aus DE 195 25 887 A1 ist es bekannt, ein solches hydraulisches Leistungsfeld entsprechend den Erfordernissen der jeweiligen Heizungsanlage anzupassen, um so das Pumpenaggregat nach Möglichkeit energetisch günstig zu betreiben. Aus EP 0 736 826 B1 ist es bekannt, die Leistungssteuerung für das Pumpenaggregat temperaturabhängig zu fahren. Diese Art der Steuerung nutzt die bei modernen Heizungsanlagen vorhandene außentemperaturgeführte Steuerung der Vorlauftemperatur aus, welche in Abhängigkeit des Wärmebedarfs die Vorlauftemperatur regelt.

Aus DE 37 04 756 A1 ist es bekannt, die Pumpenregelung in Abhängigkeit der Strömungsgeschwindigkeit im Heizungsrücklauf anzupassen. Hierzu ist jedoch ein gesonderter Strömungsmesser in der Rücklaufleitung und eine entsprechende Signalverbindung zur Pumpensteuerung vorzusehen, was aufwendig ist.

Allen vorgenannten Systemen gemeinsam ist, dass das Pumpenaggregat als unabhängiges Aggregat innerhalb der Heizungsanlage betrieben wird, sich also nur indirekt und bisher unzureichend an den tatsächlichen Anlagenbedarf anpassen kann. Eine exakte Abstimmung auf die heizungsanlagenseitigen Anforderungen wäre zwar möglicherweise noch durch Anbindung der Pumpensteuerung an die Heizungsanlagensteuerung/-regelung möglich, dies wäre jedoch verhältnismäßig aufwändig, da es keine einheitliche Schnittstelle gibt und für jede Heizungsanlage eine gesonderte Steuerung für die Pumpe erforderlich wäre. Darüber hinaus wäre eine elektrische Verbindung zwischen Pumpenaggregat und der Heizungsanlagensteuerung/-regelung erforderlich, was den Installationsaufwand zusätzlich erhöhen würde. Schließlich könnten auch mit solch einer erweiterten Steuerung heizungsanlagenseitige Änderungen, wie sie insbesondere durch die wärmebedarfgesteuerten Thermostatventile erfolgen, ebenfalls nicht erfasst werden.

Aus DE 43 12 150 A1 ist es bereits bekannt, die Pumpensteuerung an die Heizungsanlagensteuerung anzubinden. Jedenfalls ist dort ein Regler vorgesehen, der nicht nur den Elektromotor der Pumpe, sondern auch einen das Mischventil steuernden Elektromotor ansteuert. Hierdurch kann zwar die Pumpenleistung besser an den Wärmebedarf der Anlage angepasst werden, doch erfordert dies eine recht komplexe Regelung, die nicht nur aufwendig und teuer ist, sondern auch nur als komplexe Anlagenlösung und nicht als Insellösung in Form eines autark arbeitenden Pumpenaggregats realisierbar ist.

Aus DE 41 35 509 A1 zählt ein Verfahren zur Fördermengenregelung in einem mit Umwälzpumpe versehenen Umwälzkreis zum Stand der Technik, bei dem die Umwälzpumpe, sofern ein externer Bedarfssensor keinen Bedarf signalisiert, periodisch eingeschaltet wird, um mittels eines Drucksensors zu prüfen, ob ein minimales Fördervolumen überschritten wird oder nicht. Nur bei Überschreiten des minimalen Fördervolumens bleibt die Pumpe in Betrieb. Diese elektromotorisch angetriebene Heizungsumwälzpumpe weist eine Steuer- und Regelelektronik auf, die so ausgebildet ist, dass die Pumpe zunächst mit einem über der minimal liegenden Drehzahl zeitweise in Betrieb genommen wird, wobei dann, wenn bei dieser Drehzahl die Kleinstwassermenge unterschritten wird, die Pumpe abgeschaltet und ansonsten in den Normalbetrieb überführt wird. Dabei ist ein Sensor innerhalb der Pumpe zum Erfassen des Drucks vorgesehen.

Ausgehend von diesem Stand der Technik liegt der Erfindung die Aufgabe zugrunde, eine elektromotorisch angetriebene Heizungsumwälzpumpe mit einer Steuer- und Regelelektronik so auszubilden, dass nicht nur das Erreichen einer Kleinstwassermenge, sondern auch heizungsanlagenspezifische Charakteristika und deren Änderungen berücksichtigt werden, um einerseits möglichst effizient zu arbeiten und andererseits die Heizungsanlage stets ausreichend zu versorgen.

Diese Aufgabe wird gemäß der Erfindung durch ein Pumpenaggregat mit den im Anspruch 1 angegebenen Merkmalen gelöst.

Grundgedanke der vorliegenden Erfindung ist es, eine verbraucherseitige Verlaufscharakteristik zur Ermittlung der heizungsanlagenseitig erforderlichen Förderleistung heranzuziehen und die Pumpe entsprechend in ihrer Leistung anzupassen. Eine verbrauchsseitige Verlaufscharakteristik im Sinne der Erfindung ist typischerweise der Verlauf des Förderdrucks (auch Förderhöhe genannt) der Pumpe. Alternativ kann auch die Fördermenge herangezogen werden, da bei gegebener Drehzahl der Pumpe auch daraus der Förderdruck ableitbar ist. Schließlich kann diese Verlaufscharakteristik auch anhand einer elektrischen Größe, beispielsweise der Leistungsaufnahme des die Pumpe antreibenden Motors abgeleitet werden. Die vorliegende Erfindung geht im Grundgedanken davon aus, dass die von der Pumpe zu erbringende Förderleistung abhängig ist von den Wärmebedarf bestimmenden Ereignissen in der Heizungsanlage und deren Umgebung. Im Unterschied zum Stand der Technik wird gemäß der Erfindung die Leistungsanpassung der Pumpe jedoch nicht anhand eines konkreten Wertes, sondern anhand der zeitlichen Änderung, also des Verlaufs dieses Wertes vollzogen, wobei die Erfassung der verbrauchsseitigen Verlaufscharakteristik das Erkennen und Zuordnen heizungsanlagentypischer Ereignisse beinhaltet, welche die daraus für die Pumpensteuerung ableitbaren Eingriffe wesentlich gezielter und hinsichtlich der anlageseitigen Anforderungen besser erfüllen kann.

In Kenntnis dieser anhand der Verlaufscharakteristik ermittelten typischen Ereignisse wird die Drehzahl der Pumpe angepasst. Anders als bei einer Regelung nach dem Stand der Technik , bei der auf einer Regel kurve gefahren wird, wird gemäß der Erfindung beim Erreichen eines bestimmten Wertes, beispielsweise einer Förderhöhe steuerungsseitig unterschiedlich reagiert in Abhängigkeit des zeitlichen Verlaufs dieses Wertes, d. h. in Abhängigkeit des damit verbundenen Ereignisse. Es kann auf diese Weise eine regelkurvenfreie Steuerung der Anlage erfolgen, wobei in Weiterbildung der Erfindung nicht nur die verbraucherseitige Verlaufscharakteristik sondern auch noch die Größe der Änderung herangezogen werden kann, um entsprechend korrigierend in die Pumpesteuerung einzugreifen.

Eine typische Verlaufscharakteristik ist beispielsweise einer periodische Druckänderung, und zwar im Stundenbereich. Eine solche periodische Druckänderung tritt regelmäßig dann auf, wenn die Heizungsanlage pumpenseitig überversorgt ist. Dann nämlich öffnen und schließen die Thermostatventile in mehr oder weniger regelmäßigen Abständen und nehmen nicht einen bevorzugten mittleren Öffnungsgrad ein. Dieser Zustand kann durch Erfassung des Druckverlaufs der Pumpe im Stundenbereich ermittelt werden, die Drehzahl wird dann abgesenkt, bis diese periodische Druckänderung nicht mehr auftritt.

Eine weitere typische Verlaufscharakteristik ist durch eine schnelle Druckänderung im Bereich unter 5 Minuten vorzugsweise unter 1 Minute gegeben. Gemäß der Erfindung wird bei dieser Verlaufscharakteristik die Drehzahl bei einer Druckerhöhung abgesenkt und bei einem Druckabfall angehoben. Diese schnelle Druckänderung innerhalb des Systems ist typisch für einen manuellen Eingriff an einem oder mehreren Thermostatventilen der Heizungsanlage, weshalb eine sofortige Drehzahländerung, wie sie die Erfindung vorsieht, sinnvoll ist, um die Pumpenleistung an den geänderten Durchflussbedarf und somit Wärmebedarf der Anlage anzupassen.

Eine weitere typische Verlaufscharakteristik gemäß der Erfindung ist eine mittelschnelle Druckänderung im Bereich zwischen 6 Minuten und 5 Stunden. Sobald eine solche Druckänderung ermittelt wird, sieht die Erfindung vor, die Drehzahl bei Druckerhöhung während der Zeit, in der eine Druckerhöhung erfolgt, abzusenken und bei Druckabfall zumindest zeitweise während des Druckabfalls abzusenken. Eine solche mittelschnelle Druckänderung tritt typischer Weise auf, wenn beispielsweise ein Fenster oder eine Tür geöffnet wird oder aber ein Raum in dem von der Heizungsanlage versorgten Bereich durch Sonneneinstrahlung erwärmt wird. Dabei tritt bei Sonneneinstrahlung typischerweise eine Druckerhöhung ein, da das Thermostatventil in dem erwärmten Raum schließt. Die Erfindung sieht in diesem Fall vor, die Drehzahl der Pumpe abzusenken, allerdings nur für den Zeitraum des Ereignisses, da genau dann der Wärmebedarf der Heizungsanlage geringer ist.

Für das Ereignis des Fensteröffnens hingegen, bei dem der Druck in der Heizungsanlage abfällt, da das entsprechende Thermostatventil öffnet, sieht die Erfindung nicht wie Regelungen nach dem Stand der Technik vor, die Drehzahl der Pumpe zu erhöhen, da es nicht sinnvoll ist, bei geöffneten Fenster den Heizkörper vermehrt zu erwärmen, sondern nimmt ebenfalls die Drehzahl zurück, um gerade während der Zeit des geöffneten Fensters die Fördermenge abzusenken. Allerdings erfolgt diese Absenkung nur während des Druckabfalls oder während einer gewissen Zeit während des Druckabfalls, da die Erfindung davon ausgeht, dass spätestens dann, wenn der Druck wieder ansteigt, das Fenster bereits wieder geschlossen sein muss und dann der Raum wieder aufzuheizen, also der erhöhte Wärmebedarf durch Erhöhung der Drehzahl zu kompensieren ist.

Ein weiteres typisches Ereignis, das mit der Erfindung ermittelt werden kann, ist die heizungsanlagenseitig üblicherweise erfolgende Nachtabsenkung der Vorlauftemperatur. Auch diese Absenkung führt zu einer Druckänderung. Die Erfindung ermöglicht es also, ausschließlich durch den Druckverlauf den Tag - Nacht -Rhythmus der Heizungsanlage zu erkennen und die Drehzahl entsprechend anzupassen, d. h. bei geringerem Wärmebedarf während der Nacht abzusenken.

Ein weiteres typisches Ereignis ist eine langsame Druckänderung im Bereich zwischen sechs Monaten und einem Jahr. Sobald eine solche Druckänderung erfasst wird, wird gemäß der Erfindung die Drehzahl im Falle einer Druckerhöhung abgesenkt und im Falle eines Druckabfalls angehoben. Das vorgenannte Ereignis entspricht dem Wechsel der Jahreszeiten, insbesondere dem Sommer/Winterrhythmus. Die Absenkung der Drehzahl im Sommer bzw. Anhebung im Winter entspricht dem Wärmebedarf der Anlage.

Die Größe der Drehzahländerung wird bevorzugt in Abhängigkeit von Art und Größe des ermittelten Ereignisses gewählt, also in Abhängigkeit der ermittelten Druckänderung oder gegebenenfalls auch andere Größen, wie beispielsweise der Temperatur.

Gemäß der Erfindung, ist vorgesehen, die Pumpe zur Erfassung mindestens eines heizungsanlagenseitigen Kennwertes nacheinander mit mindestens zwei unterschiedlichen Drehzahlen anzusteuern. Die Steuerung steuert die Pumpe, d. h. deren Drehzahl also aktiv an, um unabhängig von den zuvor beschrieben Ereignissen Kennwerte der Heizungsanlage zu ermitteln. So ist es für die Festlegung des aktuellen Betriebspunktes, also der aktuellen Drehzahl der Pumpe zweckmäßig eine möglichst flache und eine möglichst steile Rohrnetzkennlinie der Heizungsanlage zu erfassen, um die Pumpe einerseits in einem energetisch günstigen Bereich zu betreiben und andererseits die Heizungsanlage ausreichend zu versorgen. Es ist daher gemäß der Erfindung vorgesehen, die Pumpe gezielt mit einer niedrigen Drehzahl zur Unterversorgung und zu gegebener anderer Zeit mit einer höheren Drehzahl zur gezielten Überversorgung der Heizungsanlage anzusteuern, und dabei jeweils eine entsprechende Zeit abzuwarten, bis sich ein weitgehend stabiler Betriebspunkt eingestellt um dann anhand dieses Betriebspunktes eine flache bzw. steile Rohrnetzkennlinie zu ermitteln, welche zur Wahl einer geeigneten aktuellen Betriebsdrehzahl herangezogen werden können.

Um den normalen Betrieb der Heizungsanlage durch diese aktive Steuerung nicht unnötig zu belasten, wird gemäß der Erfindung die Pumpe zunächst mit einer zu erwartenden bedarfsgerechten Drehzahl angesteuert und die nachfolgend angesteuerte Drehzahl so gewählt, dass eine zur Anlagenanalyse geeignete Abweichung vom vorherigen Betriebspunkt gegeben ist. Zeitlich erfolgt beispielsweise die Ermittlung einer flachen Rohrnetzkennlinie während der Nachtabsenkung, wenn der Wärmebedarf der Anlage ohnehin gering ist, umgekehrt die Ermittlung einer steilen Rohrnetzkennlinie bei hohem Wärmebedarf, zum Beispiel in den Morgenstunden.

Um einerseits den normalen Heizungsanlagenbetrieb nicht Übergebühr zu behindern, andererseits aber auch im zeitlichen Verlauf des Anlagenbetriebs möglichst exakte anlagenseitige Kennwerte zu erfassen, ist es zweckmäßig, die Anpassung der Pumpensteuerung im Ein- oder Mehrtagesintervall zu wiederholen, insbesondere auch im Hinblick auf die Ermittlung einer flachen Rohrnetzkennlinie während der Nachtabsenkung.

Um die Pumpe auch bei niedrigen Drehzahlen in energetisch günstigen Bereichen betreiben zu können, was insbesondere bei Pumpenaggregaten mit Permanentmagnetmotor zweckmäßig sein kann, ist gemäß der Erfindung weiter vorgesehen, die Pumpe zur Ermittlung der Durchflusssperre anzusteuern. Hierzu wird die Drehzahl entweder von Null oder nahe Null steigend oder auf Null oder auf nahe Null fallend angesteuert und der Druchfluss erfasst. Es kann wegen des Zusammenhangs zwischen Förderhöhe und Fördermenge auch die Förderhöhe erfasst werden. In dem Drehzahlbereich, in dem kein Durchfluss ermittelbar ist, wird das Kennfeld der Pumpe steuerungsseitig gesperrt, um sicherzustellen, dass die Pumpe nicht mit einer Drehzahl angesteuert wird, welche unter der Drehzahl liegt, die mindestens erforderlich ist, um die ermittelte Durchflusssperre zu überwinden. Alternativ kann die Ermittlung der Durchflusssperre auch durch Ermittlung einer Rohrnetzkennlinie der Heizungsanlage erfolgen. Wenn die Auswertung dieser Rohrnetzkennlinie einen Schnittpunkt im H-Q-Diagramm mit der Ordinate deutlich über Null ergibt, ist eine solche Durchflusssperre ebenfalls vorhanden und der unter diesem Schnittpunkt liegende Bereich des Kennfeldes zu sperren.

Grundsätzlich arbeitet die Erfindung ausschließlich über Druckerfassung, d. h. alle für die erfindungsgemäße Steuerung wesentlichen Ereignisse können durch ausschließliche Druckerfassung - die Drehzahl steht steuerungsseitig ohnehin zur Verfügung - ermittelt werden. Es kann jedoch in bestimmten Anwendungsfällen von Vorteil sein, darüber hinaus auch die Temperatur oder den Temperaturverlauf des Fördermediums heranzuziehen, sei es, nur um die Zuordnung des Ereignisses mit höherer Wahrscheinlichkeit bestimmen zu können oder auch um andere Ereignisse zu ermitteln.

Darüber hinaus können zur Leistungssteuerung der Pumpe zusätzlich klimatische und/oder zeitliche Information herangezogen werden. So ist es denkbar, bei vernetzten Systemen, beispielsweise bei einer Heizungsumwälzpumpe mit Internetanbindung, entsprechende Daten der Temperatur- und Windvorhersage in die Pumpensteuerung einfließen zu lassen. Auch können zeitlichen Informationen, beispielsweise über die Kesselsteuerung mit zur Drehzahlsteuerung herangezogen werden.

Die Erfindung kann ohne weiteres in der Steuer- und Regelelektronik einer modernen drehzahlregelbaren Heizungsumwälzpumpe integriert werden. Zweckmäßigerweise erfolgt die Erfassung verbrauchsseitiger Verlaufscharakteristiken in digitaler Form, so dass die Zuordnung anlagentypischer Ereignismuster und die damit gemäß der Erfindung vorgesehenen Eingriffe in die Drehzahl-steuerung durch entsprechende Softwareimplementierungen in den Mikroprozessoren der Motorsteuerung/Regelung erfolgen können. Dabei wird für die Zuordnung der Ereignisse bevorzugt Fuzzy-Logik eingesetzt, um auch dann, wenn keine unmittelbare Übereinstimmung mit einer ermittelten Verlaufscharakteristik und einem vorgegebenen Ereignismuster festzustellen ist, mit hoher Wahrscheinlichkeit die richtige Zuordnung zu treffen und entsprechend korrigierend in die Drehzahlsteuerung eingreifen zu können.

Erfindungsgemäß ist die Steuer- und Regelelektronik des Aggregats dabei so ausgebildet, dass die Pumpe in zeitlichen Abständen selbsttätig sich vom aktuellen Betriebspunkt unterscheidende Betriebepunkte anfährt um mindest einen Kennwert des Rohrnetzes der Heizungsanlage zu ermitteln, wobei anhand des ermittelten Kennwerts die aktuelle Drehzahl der Pumpe selbsttätig gewählt wird. Die Steuerung/Regelung umfasst also ein Programm, das durch gezielte Drehzahlansteuerung charakteristische Werte der Heizungsanlage erfasst, um dann die Drehzahl der Pumpe in einen dem Wärmebedarf der Anlage entsprechenden möglichst energetisch günstigen Bereich zu legen.

Die Steuerung/Regelung der Heizungsumwälzpumpe gemäß der Erfindung ist so ausgelegt, dass die Ansteuerung mit sich vom aktuellen Betriebspunkt unterscheidenden Drehzahlen bevorzugt über einen Zeitraum von 1 bis 30 Minuten erfolgt. Die Zeitspanne soll so gewählt sein, dass sich das System auf die neue Förderleistung einstellen kann, d. h. die daraus resultierte geänderte Rohrnetzkennlinie erfassbar ist, andererseits so kurz wie möglich, um den regulären Heizungsbetrieb möglichst wenig zu stören.

Die Heizungsumwälzpumpe gemäß der Erfindung weist Mittel zum Erfassen des Drucks, vorzugsweise des Differenzdrucks zwischen Saug- und Druckseite, der Durchflussmenge und/oder der Temperatur des Fördermediums auf. Zwar genügen zur Ermittlung des aktuellen Betriebspunkts grundsätzlich die Erfassung der Drehzahl sowie der Leistungsaufnahme des Motors, doch kann es je nach eingesetztem Motor günstiger sein, diese Werte durch Einsatzes eines Differenzdruckmessers und/oder eines Durchflussmessers innerhalb des Pumpenaggregats gegebenenfalls auch zusätzlich zur Kontrolle zu erfassen. Dies gilt insbesondere beim Einsatz von Asychronmotoren, bei denen im niedrigen Drehzahlbereich die Ermittlung des Betriebspunktes anhand der elektrischen Größen problematisch sein kann.

Zur Erfassung der verbraucherseitigen Verlaufscharakteristik werden bevorzugt Drehzahl und Förderdruck herangezogen. In der Steuer- und Regelelektronik sind darüber hinaus Mittel zum Bestimmen anlagenseitiger Veränderung und zum Zuordnen dieser Veränderungen zu einer vorgegebenen Zahl von Veränderungsmustern vorgesehen. Diese Mittel zum Bestimmen und Zuordnen arbeiten zweckmäßigerweise mit Fuzzy-Logik, welche die Bestimmung und Zuordnung auch bei nicht identischer Übereinstimmung ermöglicht. Um die Ereignisse, d. h. die anlagenseitigen Veränderungen zu bestimmen und den in der Steuer- und

Regelelektronik abgespeicherten Mustern zuzuordnen ist es zweckmäßig, in der Steuer- und Regelelektronik Mittel zum zeitlichen differenzieren der Veränderungen vorzusehen. Auf diese Weise können die Ereignisse kategorisieret werden, was deren Zuordnung wesentlich erleichtert. Vorzugsweise werden diese anlagenseitigen Veränderungen in lang-, mittel- und kurzfristig Veränderungen eingeteilt denen dann jeweils nur ein oder wenige Veränderungsmuster gegenüber zu stellen sind um eine geeignete Zuordnung zu erhalten.

Zweckmäßigerweise wird die gesamte Steuerungs- und Regelungselektronik einschließlich der in diesem Zusammenhang erforderlichen digitalen Bausteine (Mikroprozessoren) im Klemmenkasten des Pumpenaggregats angeordnet, vorzugsweise in Baueinheit mit der übrigen Steuer- und Regelelektronik des die Pumpe antreibenden Elektromotors bzw. dessen Drehzahlstellers. Auf diese Weise wird nicht nur eine kompakte Bauweise erreicht, sondern auch eine zusätzliche Kapselung der entsprechenden Bauteile entbehrlich, da der Klemmenkasten als solcher einen dichten Abschluss und guten mechanischen Schutz nach außen hin bildet.

Die Erfindung ist nachfolgend anhand von Ausführungsbeispielen näher erläutert. Es zeigen:
- Fig. 1: die Erfassung kurzfristiger Ereignisse anhand des Druckverlaufs, die Zuordnung zu vorbekannten Mustern und die entsprechende Drehzahlsteuerung,
- Fig. 2: die Erfassung eines mittelfristigen Ereignisses anhand des Druckverlaufs, die Zuordnung zu einem bekannten Muster und die Drehzahlsteuerung aufgrund dieses Ereignisses
- Fig. 3: die Erfassung eines langfristigen Ereignisses über den Druckverlauf, die Zuordnung zu einem vorgegebenen Muster sowie die entsprechende Drehzahlsteuerung.

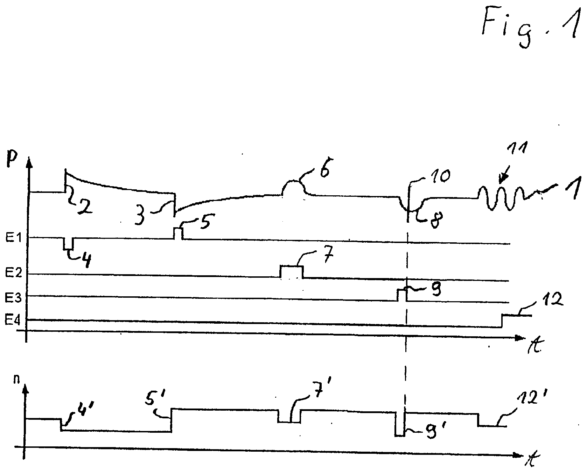

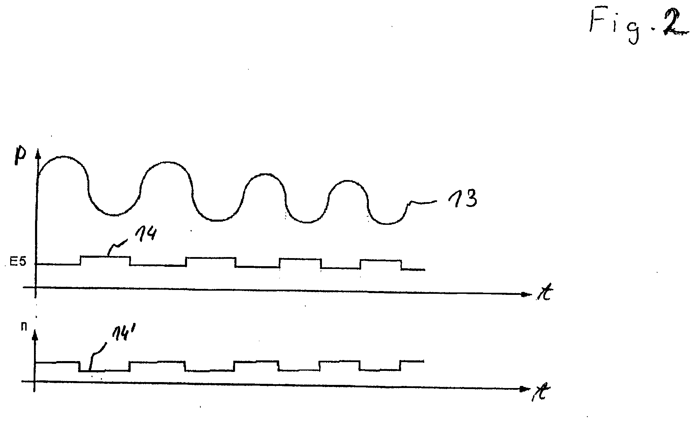

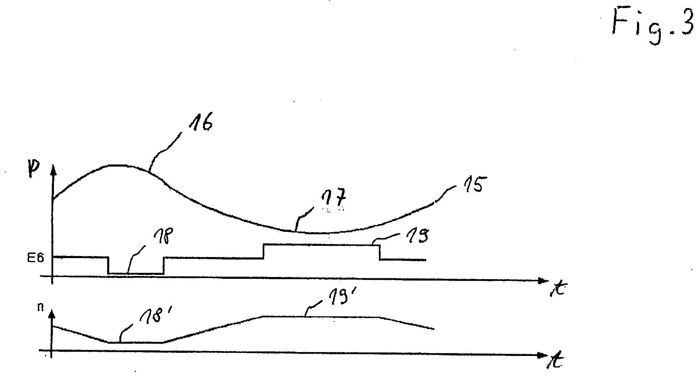

Anhand der in den Fig. 1 bis 3 dargestellten Druckverläufe wird nachfolgend beispielhaft erläutert, wie anlagentypische Ereignisse zunächst durch zeitliche Differenzierung unterschieden, vorgegebenen Ereignismustern zugeordnet werden und welche steuerungsseitigen Änderungen insbesondere der Drehzahl des die Pumpe antreibenden Motors hierauf erfolgen. In den Darstellungen gibt jeweils die Abzisse die Zeit wieder, und zwar in Fig. 1 einen Tag, in Fig. 2 eine Woche und in Fig. 3 ein Jahr, auf der Ordinate ist in der obersten Kurve jeweils der Druckverlauf, darunter ein oder mehrere logische Zuordnungsbausteine (Detektoren) sowie zu unterst die daraus resultierende Drehzahländerung dargestellt.

Die in Fig. 1 oberste Kurve stellt beispielhaft den Druckverlauf einer Heizungsanlage während eines Tages dar. Der Druckverlauf gemäß Kurve 1 ist gekennzeichnet durch einen steilen Anstieg 2, der nachfolgend langsam wieder auf den ursprünglichen Druck abfällt um dann in einen steilen Druckabfall 3 überzugehen, der dann wieder bis auf den Ursprungsdruck ansteigt. Die mit 2 und 3 gekennzeichneten spontanen Druckänderungen resultieren aus manuellen Ventileingriffen. Bei der Druckänderung 2 ist ein Thermostatventil geschlossen, bei der Druckänderung 3 ein Thermostatventil geöffnet worden. Zur Erfassung dieser spontanen Druckänderungen ist ein digitaler Detektor E 1 vorgesehen, welcher Druckänderungen im Bereich von weniger als 5 Minuten erfasst. Wird eine solche schnelle Druckänderung, welche auf die Betätigung eines oder mehrerer Thermostatventile hindeutet, erfasst, gibt der Detektor E 1 bei Druckanstieg 2 ein negatives Signal 4 und bei Druckabfall 3 ein positives Signal 5. Das Signal 4 bewirkt eine Drehzahlabsenkung 4', das Signal 5 eine Drehzahlanhebung 5' in der Steuerung der Pumpe.

Ein weiterer Detektor E 2 ist vorgesehen, um kurzfristige Druckänderungen zu erfassen, welche Ereignisse charakterisieren, die durch Sonneneinstrahlung bedingt sind. Ein solches Ereignis ist in der Kurve 1 mit 6 gekennzeichnet. Sonneneinstrahlungsbedingt erwärmt sich der Raum, wonach das Thermostatventil langsam schließt und nachfolgend wieder langsam öffnet, wenn die Sonneneinstrahlung nachlässt. Der Detektor E 2 detektiert Druckänderungen in einem Zeitfenster zwischen 6 Minuten und 5 Stunden und gibt ein Signal 7 solange ab, wie er diese für Sonneneinstrahlung typische Druckerhöhung aufgrund schließender Thermostatventile feststellt. Die Pumpensteuerung reagiert hierauf mit einer Drehzahlabsenkung 7', und zwar solange, wie das Signal 7 ansteht. Danach wird die Drehzahl wieder auf den ursprünglichen Wert angehoben, da es sich hierbei nur um ein kurzfristiges Ereignis handelt, das keine weiteren Auswirkungen auf den Wärmebedarf der Anlage hat.

Ein weiter Detektor E 3 ist vorgesehen, um kurzfristige Ereignisse zu ermitteln, welche auf Ventilation zurückzuführen sind, wie sie beim Öffnen von Fenstern oder Türen auftreten. Das Zeitfenster dieses Detektors beträgt ebenfalls 6 Minuten bis 5 Stunden. Eine Druckänderung, wie sie beim Öffnen eines Fensters und nachfolgendem Schließen typisch ist, ist in der Kurve 1 mit 8 angegeben. Mit Öffnen des Fensters fällt der Druck zunächst langsam ab, da das Thermostatventil im Raum öffnet. Nach dem Schließen des Fensters steigt der Druck dann wieder an, bis das Thermostatventil wieder in den ursprünglichen Zustand zurückgefallen ist. Der Detektor E 3 gibt ein Signal 9 jedoch nur solange ab, wie er ein den bei geöffnetem Fenster typischen Druckabfall registriert, sobald der Druck wieder ansteigt, in Kurve 1 ist dieser Zeitpunkt mit 10 beziffert, gibt der Detektor E 3 kein Signal mehr ab, da dann, wenn der Druck wieder ansteigt, das Fenster längst geschlossen ist und somit ein weiterer Eingriff zur Berücksichtigung dieses Ereignisses in der Pumpensteuerung nicht mehr sinnvoll wäre. Wie sich anhand der Drehzahlabsenkung 9' ergibt, wird solange wie der Detektor E 3 ein Signal abgibt, die Drehzahl der Pumpe, anders als beim Stand der Technik, nicht angehoben sondern abgesenkt. Dieser Steuerung liegt die Überlegung zugrunde, dass die Heizungsanlage während Lüftungsaktionen nicht verstärkt, sondern eher vermindert versorgt werden sollte, da es nicht sinnvoll ist, während dieser Zeit vermehrt Wärme zuzuführen, die durch das geöffnete Fenster ohnehin entweichen würde.

Ein weiterer Sensor E 4 ist vorgesehen, der kurzfristige Druckänderungen erfasst, also ein Zeitfenster vom Minuten- bis Stundenbereich aufweist. Der Detektor E 4 dient zur Erfassung periodischer Druckänderungen, wie sie in der Kurve 1 durch die Druckänderungen 11 dargestellt sind. Sobald der Detektor E 4 eine periodische Druckänderung feststellt gibt er ein Signal 12 ab, das steuerungsseitig zu einer dauerhaften Drehzahlabsenkung 12' führt. Der Detektor E 4 ermittelt somit Schwingungen im Druckverlauf, die dadurch entstehen, dass die Thermostatventile kurzfristig öffnen und schließen, was auf eine Überversorgung hinweist. Konsequent erfolgt daher eine dauerhafte Drehzahlabsenkung 12' um dieses Ereignis zukünftig zu vermeiden.

In Fig. 2 ist auf der Zeitachse der Zeitraum einer Woche dargestellt. Ein Detektor E 5 bestimmt Ereignisse in einem Zeitfenster von einem Tag bis zu einer Woche. Die Kurve 13 kennzeichnet den Druckverlauf innerhalb der Heizungsanlage während einer Woche. Es wird deutlich, dass auch hier eine periodische Druckänderung vorliegt, die jedoch anders als bei 11 nicht im Stunden- sondern im Tagesbereich liegt. Der Detektor E 5 ermittelt diese mittelfristige Druckänderung und gibt bei Druckabfall ein Signal 14, währenddessen die Drehzahl abgesenkt wird, die entsprechende Drehzahlabsenkung ist mit 14' gekennzeichnet. Bei dem Detektor E 5 handelt es sich um einen Detektor zur Erfassung von Tag und Nacht, insbesondere zur Erfassung der Absenkung der Vorlauftemperatur während der Nacht. Wenn dieses detektiert wird, wird auch die Drehzahl der Pumpe abgesenkt, davon ausgehend, dass dann der Wärmebedarf der Heizungsanlage und damit auch der Förderbedarf der Pumpe vermindert ist.

In Fig. 3 ist auf der Zeitachse ein Jahr dargestellt, der Detektor E 6 ist zur Ermittlung von Sommer und Winter vorgesehen. Er detektiert somit Ereignisse in einem Zeitfenster von sechs Monaten bis zu einem Jahr. Die Kurve 15 zeigt den Druckverlauf der Heizungsanlage während eines Jahres, dabei ist in einem Bereich 16 erhöhter Druck und in einem Bereich 17 niedrigerer Druck festzustellen. Der erhöhte Druck resultiert aus den im Sommer im Wesentlichen schließenden Thermostatventilen. Der Detektor E 6 erfasst dies und gibt während dieses den Sommer repräsentierenden erhöhten Drucks ein negatives Signal 18 ab, das zu einer Drehzahlabsenkung 18' führt, umgekehrt wird die Druckabsenkung 17 während der Wintermonate erkannt und mit einem positiven Signal 19 beantwortet, was wiederum zu einer Drehzahlerhöhung 19' in der Pumpensteuerung führt. Diese Drehzahlanpassungen berücksichtigen, dass im Sommer der Wärmebedarf der Anlage geringer ist und somit auch der Förderbedarf, im Winter umgekehrt.

Wie die vorstehenden Ausführungsbeispiele verdeutlichen, können die anlagentypischen Ereignisse zum Einen durch zeitliche Differenzierung und zum Anderen durch charakteristische Druckverläufe in den einzelnen Zeitfenstern bestimmt werden, wonach die Pumpensteuerung die Drehzahl entsprechend anpasst. In den vorstehenden beschriebenen Beispielen ist die Größe der Anpassung, d. h. der Drehzahländerung nicht angegeben, es versteht sich, dass dies in Abhängigkeit der Amplituden der ermittelten Ereignisse und der Ereignisse selbst erfolgt.

Die vorbeschriebenen Detektoren E 1 bis E 6 werden zweckmäßigerweise in Form logischer Verknüpfungen gebildet. Die Drehzahl bestimmenden Ereignisse legen jedoch die Betriebsdrehzahl der Pumpe nicht zwingend ausschließlich fest, die charakteristischen Eigenschaften der Heizungsanlage, soweit es deren Rohrnetzwiderstände angeht, werden von der Pumpensteuerung selbsttätig ermittelt indem wie eingangs beschrieben eine möglichste flache und eine möglichste steile Rohrnetzkennlinie ermittelt oder anhand ermittelter Werte nachgebildet werden um dann den für den Betrieb der Pumpe energetisch sinnvollen Kennfeldbereich sowie eine erste Betriebsdrehzahl festzulegen, die dann in der vorbeschriebenen Weise mittels der Detektoren E 1 bis E 6 abgesenkt bzw. angehoben wird. Die Drehzahl wird also nicht längs einer konventionellen Regelkurve geführt, sondern in Abhängigkeit der ermittelten Ereignisse festlegt.

## Patentansprüche

1. Elektromotorisch angetriebene Heizungsumwälzpumpe mit einer Steuer- und Regelelektronik, bei der die Steuer- und Regelelektronik so ausgebildet ist, dass die Pumpe zunächst mit einer bedarfsgerechten Drehzahl angesteuert wird und in zeitlichen Abständen selbsttätig sich vom aktuellen Betriebspunkt unterscheidende Betriebspunkte anfährt, die eine zur Anlagenanalyse geeignete Abweichung vom vorherigen Betriebspunkt aufweisen, um mindestens einen Kennwert des Rohrnetzes der Heizungsanlage zu ermitteln und bei der anhand des ermittelten Kennwertes die aktuelle Drehzahl der Pumpe selbsttätig gewählt wird, bei der Mittel zum Erfassen von Druck, Durchflussmenge und/oder Temperatur des Fördermediums vorgesehen sind und bei der die Steuer- und Regelelektronik Mittel zum Bestimmen anlagenseitiger Veränderungen und zum Zuordnen dieser Veränderungen zu einer vorgegebenen Zahl von Veränderungsmustern aufweist.

2. Heizungsumwälzpumpe nach Anspruch 1, bei der Mittel zum Erfassen des Differenzdrucks zwischen Saugseite und Druckseite vorgesehen sind.

3. Heizungsumwälzpumpe nach Anspruch 1 oder 2, bei der die Ansteuerung mit sich vom aktuellen Betriebspunkt unterscheidenden Drehzahlen über einen Zeitraum von einer bis dreißig Minuten erfolgt.

4. Heizungsumwälzpumpe nach einem der vorhergehenden Ansprüche, bei der die Steuer- und Regelelektronik Mittel zum zeitlichen Differenzieren der ermittelten anlageseitigen Veränderungen aufweist.

5. Heizungsumwälzpumpe nach einem der vorhergehenden Ansprüche, bei der Mittel vorgesehen sind, die anlagenseitige Veränderungen in Kategorien einteilen.

6. Heizungsumwälzpumpe nach Anspruch 5, bei der die anlagenseitigen Veränderungen in drei Kategorien eingeteilt werden, nämlich in lang-, mittel- und kurzfristige Veränderungen.

7. Heizungsumwälzpumpe nach einem der vorhergehenden Ansprüche, bei der die Steuer- und Regelelektronik im Klemmenkasten des Aggregats angeordnet ist.

8. Heizungsumwälzpumpe nach Anspruch 7, bei der die Steuer- und Regelelektronik als Baueinheit im Klemmenkasten des Aggregats angeordnet ist.

## Claims

1. An electromotorically driven heating circulation pump with control and regulation electronics, concerning which the control and regulation electronics are designed such that the pump is firstly activated at a needsbased rotation speed and in temporal intervals automatically moves from the current operating point to different operating points which have a divergence from the previous operating point, said divergence being suitable for the analysis of the facility, in order to determine at least one characteristic value of the pipe network of the heating facility and concerning which the current rotation speed of the pump is automatically selected on the basis of the determined characteristic value, concerning which means for the detection of pressure, flow rate and/or temperature of the delivery medium are provided and concerning which the control and regulation electronics comprise means for determining facility-side changes and for assigning these changes to a predefined number of change patterns.

2. A heating circulation pump according claim 1, with which means for detecting the differential pressure between the suction side and the pressure side are provided.

3. A heating circulation pump according to claim 1 or 2, with which the activation is effected with rotational speeds which are different from the current operating point, over a time period from one to thirty minutes.

4. A heating circulation pump according to one of the preceding claims, with which the control and regulation electronics comprise means for temporally differentiating the evaluated installation-side changes.

5. A heating circulation pump according to one of the preceding claims, with which means for dividing installation-side changes into categories are provided.

6. A heating circulation pump according to claim 5, with which the installation-side changes are divided into three categories, namely into long-term, mid-term and short-term changes.

7. A heating circulation pump according to one of the preceding claims, with which the control and regulation electronics are arranged in the terminal box of the assembly.

8. A heating circulation pump according to claim 7, with which the control and regulation electronics are arranged as a module in the terminal box of the assembly.

## Revendications

1. Pompe de recirculation de chauffage entraînée par moteur électrique avec une électronique de commande et de régulation, pour laquelle l'électronique de commande et de régulation étant réalisée de telle sorte que la pompe soit d'abord asservie avec un régime adapté aux besoins et que, à des intervalles de temps, elle se règle automatiquement à d'autres points de fonctionnement, différents du point de fonctionnement actuel et présentant une différence au point de fonctionnement précédent adaptée pour permettre une analyse de l'installation, pour déterminer au moins une caractéristique de fonctionnement du réseau de conduits de l'installation de chauffage, et pour laquelle le régime actuel de la pompe est choisi automatiquement sur la base de la valeur caractéristique déterminée, pour laquelle des moyens sont prévus pour enregistrer la pression, le débit et/ou la température du fluide de transport et pour laquelle l'électronique de commande et de régulation comprend des moyens pour déterminer des changements du côté de l'installation et pour associer ces changements à un nombre prédéterminé de modèles de changement.

2. Pompe de recirculation de chauffage selon la revendication 1, pour laquelle des moyens pour enregistrer la différence de pression entre le côté aspiration et le côté refoulement sont prévus.

3. Pompe de recirculation de chauffage selon la revendication 1 ou 2, pour laquelle la commande s'effectue avec des régimes se différenciant du point de fonctionnement actuel sur une période d'une à trente minutes.

4. Pompe de recirculation de chauffage selon l'une des revendications précédentes, pour laquelle l'électronique de commande et de régulation présente des moyens pour différentier dans le temps des changements du côté installation déterminés.

5. Pompe de recirculation de chauffage selon l'une des revendications précédentes, pour laquelle des moyens sont prévus qui différencient les changements du côté installation, en des catégories.

6. Pompe de recirculation de chauffage selon la revendication 5, dans laquelle les changements du côté de l'installation sont différenciés en trois catégories, à savoir en changements à long terme, à moyen terme et à court terme.

7. Pompe de recirculation de chauffage selon l'une des revendications précédentes, pour laquelle l'électronique de commande et de régulation est disposée dans la boîte à bornes du groupe.

8. Pompe de recirculation de chauffage selon la revendication 7, pour laquelle l'électronique de commande et de régulation est disposée sous forme de module dans la boîte à bornes du groupe.
